**Europäisches Patentamt**

**European Patent Office**

**Office européen des brevets**

(19)

(11) Veröffentlichungsnummer: **0 518 046 A1**

# EUROPÄISCHE PATENTANMELDUNG

(12)

(21) Anmeldenummer: **92107561.0**

(22) Anmeldetag: **05.05.92**

(51) Int. Cl.⁵: **B60N 2/24**, B60N 2/34

(30) Priorität: **23.05.91 DE 9106344 U**

(43) Veröffentlichungstag der Anmeldung:
**16.12.92 Patentblatt 92/51**

(84) Benannte Vertragsstaaten:
**AT CH FR LI**

(71) Anmelder: **Welter, Manfred**
**Max-Planck-Strasse 10**
**W-4172 Straelen(DE)**

(72) Erfinder: **Welter, Manfred**
**Max-Planck-Strasse 10**
**W-4172 Straelen(DE)**

(74) Vertreter: **Funken, Josef, Dipl.-Ing.**
**Hochstrasse 3e**
**W-4133 Neukirchen-Vluyn(DE)**

(54) **Reisefahrzeug.**

(57) Bei einem Reisefahrzeug, insbesondere Reiseomnibus mit einem Mittelgang durch den Fahrgastraum, der zu beiden Seiten des Mittelganges durch Zwischenwände 123,124 in mehrere Abteile mit je zwei einander gegenüber angeordneten Doppelsitzen mit Sitzbank 76 und Rückenlehne 75 unterteilt ist, die aus einer Sitzposition in eine Liegeposition und umgekehrt zu bringen sind, wobei jeder Doppelsitz einen die Rückenlehne 75 aufnehmenden Lehnenrahmen 35 und einen die Sitzbank 76 aufnehmenden Sitzrahmen 44 aufweist sowie der Lehnenrahmen 35 mit der zugehörigen Zwischenwand 123 gelenkig verbunden ist und hinter dem Lehnenrahmen ein in Fahrzeuglängsrichtung schwenkbeweglich angeordneter Bettrahmen vorgesehen ist sowie die oberen Betten durch Stützen unterstützt und mittels Gurten am Dach des Omnibusses befestigt sind, ist vorgesehen,

a) daß die oberen Betten 81 durch verriegelbare Distanzierungsstäbe 33 in der gewünschten horizontalen Position gehalten sind,

b) daß im Bereich der Seitenfenster und im Bereich des Daches 27 Fluchtwege 1 vorgesehen sind,

c) daß die Zwischenwände 123,124 in den Bereichen der zwischen zwei benachbarten Fenstern befindlichen Fensterholme angeordnet sind und

d) daß die Zwischenwände 123,124 elastisch ausgebildet sind.

FIG. 2

EP 0 518 046 A1

Die Erfindung betrifft ein Reisefahrzeug, insbesondere Reiseomnibus mit einem Mittelgang durch den Fahrgastraum, der zu beiden Seiten des Mittelganges durch Querwände in mehrere Abteile mit je zwei einander gegenüber angeordneten Doppelsitzen mit Sitzbank und Rückenlehne unterteilt ist, die aus einer Sitzposition in eine Liegeposition und umgekehrt zu bringen sind, wobei jeder Doppelsitz einen die Rückenlehne aufnehmenden Lehnenrahmen und einen die Sitzbank aufnehmenden Sitzrahmen aufweist sowie der Lehnenrahmen mit der zugehörigen Querwand gelenkig verbunden ist und hinter dem Lehnenrahmen ein in Fahrzeuglängsrichtung schwenkbeweglich angeordneter Bettrahmen vorgesehen ist sowie die oberen Betten durch Stützen unterstützt und mittels Gurten am Dach des Omnibusses befestigt sind.

Ein derartiges Reisefahrzeug ist aus der DE-OS 37 16 626 bekannt. Dabei ist vorgesehen, daß der Lehnenrahmen um sein unteres Ende in Fahrzeuglängsrichtung verschwenkbar ist, wobei der Lehnenrahmen an seinem unteren Ende zu beiden Seiten mit je einer Lasche und der Sitzrahmen an seinem rückwärtigen Ende zu beiden Seiten mit je einem Hebel fest verbunden sind. Dabei sind die Laschen an ihren rückwärtigen Enden in Gelenken an der Querwand gelagert und an ihren vorderen Enden mit den Hebeln gelenkig verbunden. Des weiteren ist an jeder Seitenwand der Doppelsitze ein schräg nach rückwärts zum Fahrzeugboden verlaufendes Führungsprofil angeordnet. Außerdem ist im vorderen Bereich des Sitzrahmens zu beiden Seiten außen je eine Führungsrolle vorgesehen, die in den Führungsprofilen geführt ist, so daß bei Verschwenken des Lehnenrahmens um das Gelenk in Fahrzeuglängsrichtung der sitzrahmen zum Fahrzeugboden geführt wird.

Aus der DE-PS 36 18 826 ist ein Reisefahrzeug bekannt, bei dem vorgesehen ist, daß die Sitzbank in der Sitzposition auf der Oberseite zwei nebeneinander angeordnete Sitzpolster und auf der Unterseite eine elastisch nachgiebige Liegeauflage hat sowie um eine am vorderen Ende der Sitzbank vorgesehene quer zur Fahrzeuglängsrichtung laufende Schwenkachse um etwa 180° nach vorn umlegbar ist. Dabei ist vorgesehen, daß die Rückenlehne in der Sitzposition vorn zwei nebeneinander angeordnete Rückenpolster und hinten eine elastisch nachgiebige Liegeauflage hat sowie um eine am oberen Ende der Rückenlehne vorgesehene quer zur Fahrzeuglängsrichtung verlaufende Achse in eine horizontale Position hochschwenkbar und in dieser Position um 180° um eine in Fahrzeuglängsrichtung verlaufende Achse wendbar und in dieser Position fixierbar ist.

An der Innenseite des Abteils ist eine Armlehne vorgesehen, die um eine vordere Achse zum Abstützen der in der horizontalen Position befindlichen Rückenlehne hochschwenkbar ist, während an der Fensterseite eine an der Außenwand gelagerte Strebe vorgesehen ist, die zum Unterstützen der in die horizontale Position hochgeschwenkten Rückenlehne um eine vordere Achse hochschwenkbar ist. Am Dach des Fahrzeuges sind Sicherheitsgurte vorgesehen, mit denen die hochgeschwenkten Rückenlehnen zu befestigen sind.

Aus der DE-AS 12 17 805 ist ein Reiseomnibus bekannt, bei dem zu beiden Seiten des Mittelganges in Fahrtrichtung orientierte Doppelsitze vorgesehen sind. Der Abstand der Doppelsitze voneinander in Längsrichtung des Omnibusses entspricht der Länge der Sitzpolster. Dabei besteht ein Sitzpolster eines Sitzes aus zwei an der Hinterkante des Sitzpolsters aneinander angelenkten, in Sitzstellung zusammengeklappten unteren und oberen Polsterhälften. Diese sind zur Bildung von Liegeflächen auseinanderzuklappen und mit den entsprechenden Polsterhälften des zugehörigen Nachbarsitzes zu verbinden. Desgleichen besteht das Rückenlehnenpolster jedes Sitzes aus zwei an der Oberkante des Rückenlehnenpolsters aneinander angelenkten, in Sitzstellung zusammengeklappten vorderen und hinteren Polsterhälften. Diese sind zur Bildung von Liegeflächen nach oben hin auseinanderklappbar. In dieser horizontalen Lage sind diese Polsterhälften durch Ketten, Bänder oder dgl. in ihrer Lage zu halten.

Bei einer eventuellen Verunfallung des Reisefahrzeuges ist es nicht mit absoluter Sicherheit ausgeschlossen, daß sich die Unterstützungen unter den oberen Betten aus ihrer gewünschten Position verschieben und die oberen Betten aus ihrer horizontalen Position in Richtung zum Dach des Fahrzeuges wegschwenken können.

Der Erfindung liegt die Aufgabe zugrunde, bei einer Verunfallung bzw. bei einem Überrollen des Reisefahrzeuges zu verhindern, daß die auf den unteren Betten liegenden Fahrgäste die auf den oberen Betten liegenden Fahrgäste verletzen.

Zur Lösung dieser Aufgabe ist erfindungsgemäß vorgesehen,

a) daß die oberen Betten durch verriegelbare Distanzierungsstäbe in der gewünschten horizontalen Position gehalten sind,

b) daß im Bereich der Seitenfenster und im Bereich des Daches Fluchtwege vorgesehen sind,

c) daß die Zwischenwände in den Bereichen der zwischen zwei benachbarten Fenstern befindlichen Fensterholme angeordnet sind und

d) daß die Zwischenwände elastisch ausgebildet sind.

Auf diese Weise gelangt man zu einem Reisefahrzeug, bei dem bei einer eventuellen Verunfallung des Fahrzeuges die oberen Betten in ihrer Position verbleiben, wodurch gewährleistet ist, daß nicht die in den oberen Betten liegenden Fahrgäste von den in den unteren Betten liegenden Fahrgästen verletzt werden, indem die Fahrgäste der unteren Betten auf die Fahrgäste der oberen Betten fallen. Durch die erfindungsgemäßen Maßnahmen ist diese Gefahr mit Sicherheit ausgeschlossen.

Zweckmäßig sind die Distanzierungsstäbe nur an ihren oberen Enden oder nur an ihren unteren Enden jeweils einzeln gegen Herauslösen aus der gewünschten Unterstützungsposition verriegelt.

Es ist auch möglich, die Anordnung so zu treffen, daß die Distanzierungsstäbe nur an ihren oberen Enden oder nur an ihren unteren Enden gemeinsam gegen Herauslösen aus der gewünschten Unterstützungsposition verriegelt sind.

Zweckmäßig kann das Reisefahrzeug so ausgebildet sein,

e) daß an den Zwischenwänden in Höhe des Sitzrahmens zwei Wandlaschen in einem der Breite des Sitzrahmens entsprechenden Abstand angeordnet sind,

f) daß der Lehnenrahmen etwa in Sitzhöhe zu beiden Seiten je eine Lehnenlasche aufweist, die mit den Wandlaschen drehbeweglich verbunden sind,

g) daß der Sitzrahmen in seinem oberen Bereich gelenkig mit dem Lehnenrahmen verbunden ist und

h) daß zu beiden Seiten des Sitzrahmens an diesem je ein Lenker gelenkig angeordnet ist, der mit Abstand unterhalb des Sitzrahmens ortsfest und gelenkig gelagert ist.

Hierbei sind zweckmäßig die Wandlaschen und die Lehnenlaschen über quer zur Fahrzeuglängsrichtung verlaufende Drehgelenke miteinander verbunden sind.

Zwischen den Lehnenrahmen und den Sitzrahmen können quer zur Fahrzeuglängsrichtung verlaufende Drehgelenke vorgesehen sein.

Zweckmäßig sind die Lenker in quer zur Fahrzeuglängsrichtung verlaufenden Drehgelenken gelagert.

Es empfiehlt sich, daß hinter jedem Lehnenrahmen ein Bettrahmen für das obere Bett vorgesehen ist, der aus einem Vorderrahmen und einem Hinterrahmen besteht, wobei der Vorderrahmen an der Zwischenwand in Fahrzeuglängsrichtung schwenkbeweglich angeordnet und zwischen dem Vorderrahmen und dem Hinterrahmen ein Knickgelenk vorgesehen ist.

Zweckmäßig ist an dem der Zwischenwand abgewandten Ende des Vorderrahmens zu dessen beiden Seiten je eine Vorderlasche angeordnet und am benachbarten Ende des Hinterrahmens zu dessen beiden Seiten je eine Hinterlasche angeordnet, die beide gelenkig miteinander verbunden sind.

In weiterer Ausgestaltung der Erfindung kann das Reisefahrzeug so ausgebildet sein, daß an der Innenseite des Abteils eine als Distanzierungsstab dienende Armlehne vorgesehen ist, die um eine vordere Achse zum Abstützen der sich in der horizontalen Position befindlichen Rückenlehne hochschwenkbar ist, und daß am unteren Ende des Vorderrahmens ein zum Ende des Vorderrahmens hin offener Aufnahmeschlitz für den Kopf der Armlehne vorgesehen ist, wobei der Aufnahmeschlitz von dem gegenüberliegenden Ende des sich anschließenden Hinterrahmens verriegelt ist.

Eine weitere zweckmäßige Anordnung besteht darin, daß an der Fensterseite des Abteils eine als Distanzierungsstab dienende Strebe vorgesehen ist, die um eine vordere Achse zum Unterstützen der sich in der horizontalen Position befindlichen Rückenlehne hochschwenkbar ist, und daß am unteren Ende des Vorderrahmens ein zum Ende des Vorderrahmens hin offener Aufnahmeschlitz für den Kopf der Strebe vorgesehen ist, wobei der Aufnahmeschlitz von dem gegenüberliegenden Ende des sich anschließenden Hinterrahmens verriegelt ist.

Zweckmäßig weist der Kopf des Distanzierungsstabes eine Kopfplatte und eine Hinterdrehung auf, mit der er in den Aufnahmeschlitz eingreift.

Die Zwischenwände können aus einem elastischen Lochblech und einer Hartfaserplatte bestehen, die beidseitig mit einem Velour bespannt sind.

Zweckmäßig sind die einzelnen Zwischenwände zwischen je zwei oberen und zwei unteren Aufnahmegabeln befestigt.

Die Erfindung wird nachfolgend anhand eines in der Zeichnung dargestellten Ausführungsbeispieles des näheren erläutert. Es zeigt:

Fig. 1 eine Seitenansicht auf einen Reiseomnibus mit den erfindungsgemäßen Merkmalen

Fig. 2 eine Ansicht auf ein Abteil vom Mittelgang her mit den Sitzen in der Sitzposition,

Fig. 3 eine Ansicht auf ein Abteil vom Mittelgang her mit den Sitzen in der Liegeposition,

Fig. 4 eine Darstellung des Gestänges eines Sitzes in ausgezogenen Linien in der Sitzposition und in strichpunktierten Linien in der Liegeposition,

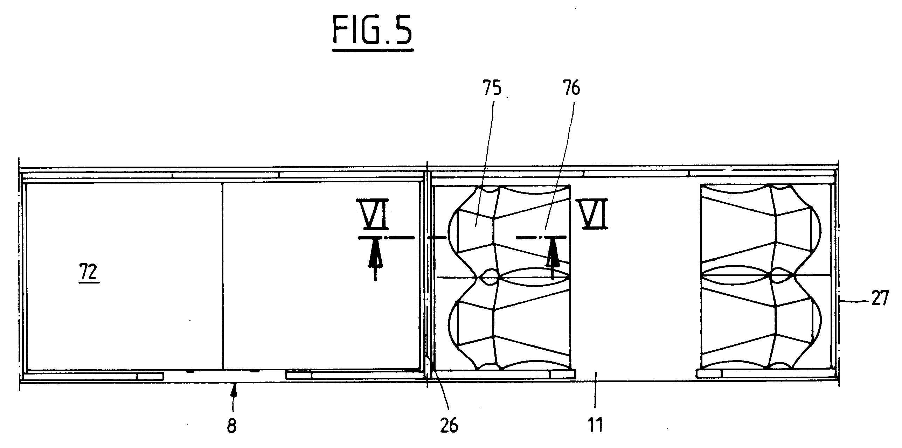

Fig. 5 eine Draufsicht auf zwei benachbarte Abteile,

Fig. 6 einen Schnitt durch eine Zwischenwand,

Fig. 7 eine vergrößerte Darstellung des Ausschnittes VII der Figur 3 teilweise im Schnitt und

Fig. 8 einen Schnitt längs der Linie VIII-VIII der Figur 7.

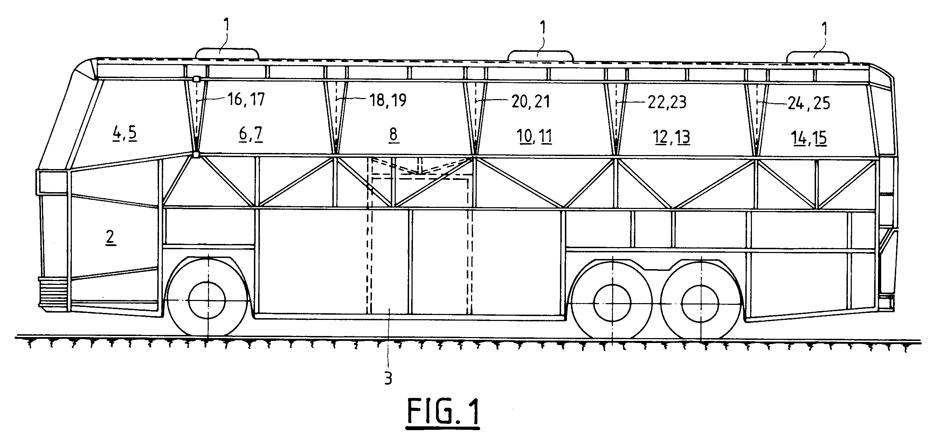

Figur 1 zeigt eine Gesamtdarstellung eines erfindungsgemäß ausgebildeten Omnibusses mit ei-

nem Fahrerraum 2 und einem Eingang 3. Der Fahrgastraum ist unterteilt in gegenüberliegende Abteile 4,5 und 6,7 sowie das Einzelabteil 8 und weitere gegenüberliegende Abteile 10,11 und 12,13 sowie 14,15. Die diesen Abteilen zugeordneten Fenster sind durch die Holme 16,17; 18,19; 20,21; 22,23 und 24,25 voneinander getrennt. Im Bereich dieser Holme befinden sich auch die die einzelnen Abteile voneinander trennenden Querwände. Im Dach des Omnibusses sind drei Fluchtwege bildende Klappen 1 vorgesehen.

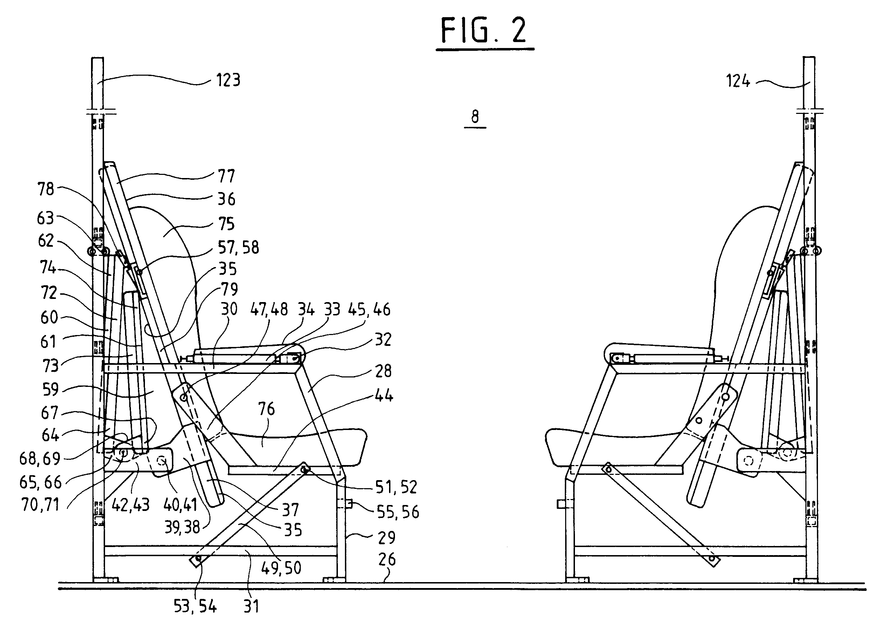

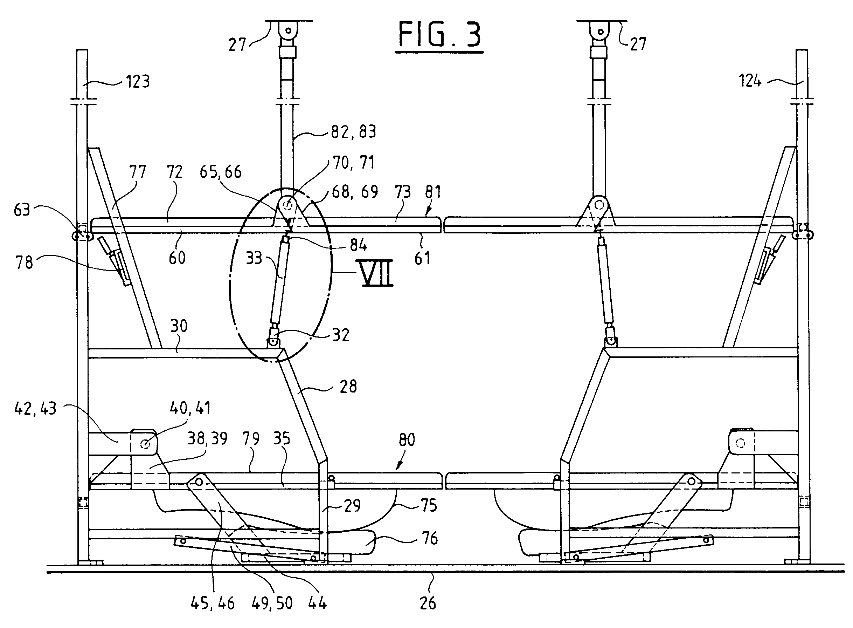

Gemäß der Darstellung in Figur 2 sind die beiden das Abteil 8 bildenden Zwischenwände 123,124 zwischen einer Montageschiene 26 auf dem Boden des Omnibusses und der in Figur 2 nicht, aber in Figur 3 dargestellten Decke 27 des Omnibusses angeordnet. Des weiteren ist auf der Montageschiene 26 ein Seitenrahmen 28 vorgesehen, der unten einen senkrecht angeordneten Fuß 29 und oben eine waagrecht verlaufende Lehne 30 aufweist. Zwischen dem Fuß 29 und der Zwischenwand 123 ist eine in Fahrzeuglängsrichtung verlaufende Längsstrebe 31 vorgesehen. Am vorderen Ende der Lehne 30 ist einem quer zur Fahrzeuglängsrichtung verlaufenden Gelenk 32 eine Armlehne 33 mit einer Polsterung 34 schwenkbeweglich angeordnet.

Ein Lehnenrahmen 35 liegt mit seinem oberen Ende 36 gegen die Zwischenwand 123 und verläuft schräg nach unten. Am unteren Ende 37 des Lehnenrahmens 35 sind zu beiden Seiten des Lehnenrahmens 35 im Abstand seiner Breite zwei Lehnenlaschen 38,39 angebracht, die über quer zur Fahrzeuglängsrichtung angeordnete Gelenke 40,41 mit im gleichen Abstand zueinander an der Zwischenwand 123 befestigten Wandlaschen 42,43 gelenkig gelagert sind. Mit Abstand oberhalb der Lehnenlaschen 38,39 ist ein Sitzrahmen 44 über im Abstand der Breite des Sitzrahmens 44 angeordnete Seitenlaschen 45,46 über quer zur Fahrzeuglängsrichtung verlaufende Gelenke 47,48 gelenkig verbunden. Außerdem sind ebenfalls im Abstand der Breite des Sitzrahmens Lenker 49,50 vorgesehen, die an ihren oberen Enden über quer zur Fahrzeuglängsrichtung verlaufende Gelenke 51,52 mit dem Sitzrahmen 44 und über ebenfalls quer zur Fahrzeuglängsrichtung verlaufende Gelenke 53,54 verlaufende Gelenke jeweils beidseitig gelenkig gelagert sind.

An dem Fuß 29 sind Vorsprünge 55,56 vorgesehen, die mit an dem Lehnenrahmen 35 angeordneten Lagerstiften 57,58 zusammenwirken.

In dem Raum 59 zwischen dem Lehnenrahmen 35 und der Zwischenwand 123 ist das Oberbett gelagert. Der Rahmen des Oberbettes besteht aus einem Vorderrahmen 60 und einem Hinterrahmen 61. Der Vorderrahmen 60 ist an seinem der Zwischenwand 123 zugewandten Ende 62 über ein quer zur Fahrzeuglängsrichtung verlaufendes Schwenkgelenk 63 in Fahrzeuglängsrichtung schwenkbar angeordnet. Am gegenüberliegenden Ende 64 sind an dem Vorderrahmen 60 im Abstand seiner Breite zwei Vorderlaschen 65,66 angeordnet. Am benachbarten Ende 67 des Hinterrahmens 61 sind ebenfalls im Abstand der Breite des Hinterrahmens 61 zwei Hinterlaschen 68,69 angeordnet, wobei die Vorderlaschen 65,66 und die Hinterlaschen 68,69 mittels zweier quer zur Fahrzeuglängsrichtung verlaufender Gelenke 70,71 knickbeweglich miteinander verbunden sind. Auf dem Vorderrahmen 60 und dem Hinterrahmen 61 sind Matrazen 72,73 angeordnet. Das gegenüberliegende Ende 74 des Hinterrahmens befindet sich zwischen dem Vorderrahmen 60 und dem Lehnenrahmen 35.

Auf dem Lehnenrahmen 35 ist ein Lehnenpolster 75 und auf dem Sitzrahmen 44 ein Sitzpolster 76 vorgesehen.

Auf eine Beschreibung des in Figur 2 rechts dargestellten Sitzes wird nachfolgend verzichtet, weil dieser Sitz mit dem in Figur 2 links dargestellten und vorstehend im einzelnen erläuterten Sitz übereinstimmt.

Der Lehnenrahmen 35 ist in seinem oberen Bereich an einer schräg zwischen der Zwischenwand 123 und der Lehne 30 verlaufenden Halterung gehalten und ist über den Griff 78 zu arretieren bzw. zu lösen. Auf der der Polsterung 75 gegenüberliegenden Seite des Lehnenrahmens 35 ist eine Liegefläche 79 vorgesehen.

In Figur 3 ist die Liegeposition der Unterbetten 80 und der Oberbetten 81 dargestellt.

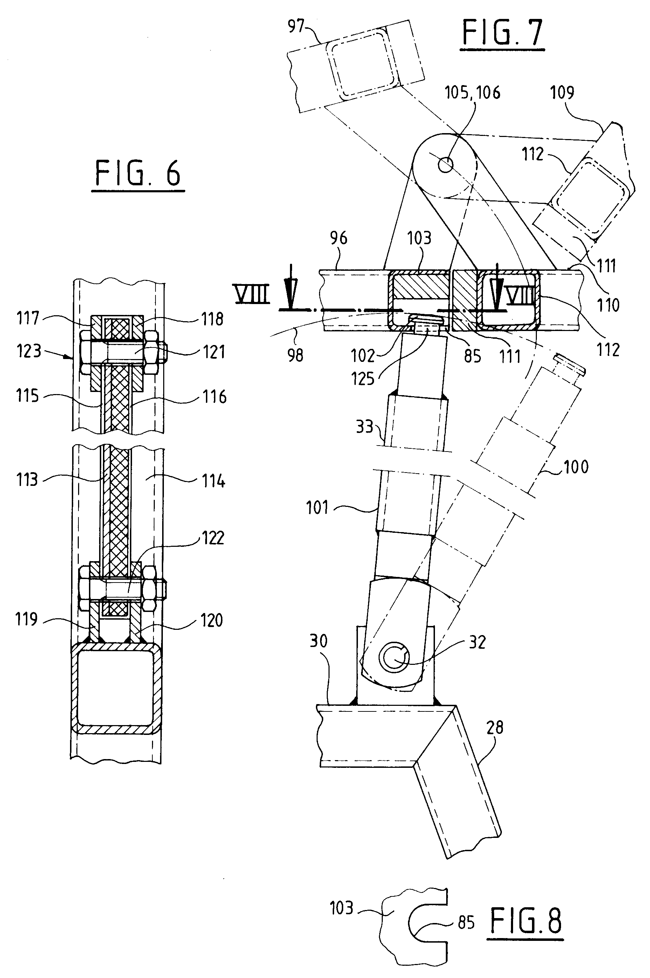

Zwischen dem Knickgelenk 70,71 und dem Dach 27 des Omnibusses sind Gurte 82,83 vorgesehen, während die als Distanzierungsstab wirkende Armlehne 33 unter das von der Zwischenwand 123 abgewandte Ende des Vorderrahmens 60 gestellt sind. Hierbei ist der Kopf 84 der Stütze 33 in einem Schlitz 85 verriegelt, wie im einzelnen in Figur 7 und Figur 8 dargestellt ist.

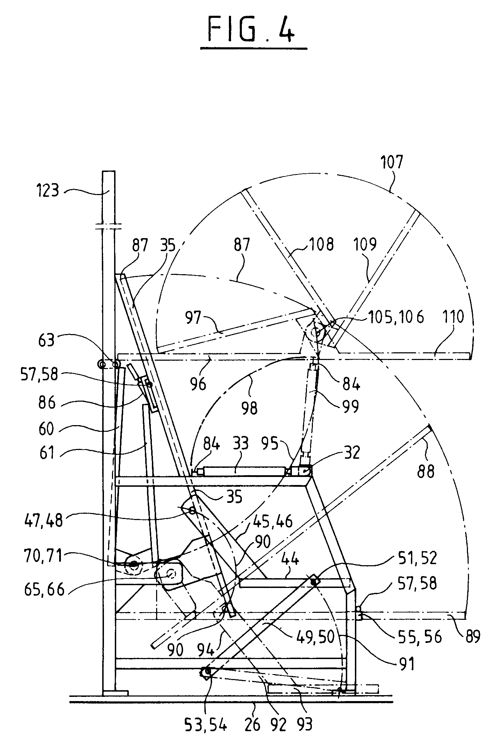

Aus Figur 4 geht die Kinematik dieser Anordnung hervor. Die Darstellung in ausgezogenen Linien entspricht der Sitzposition, während die Darstellung in strichpunktierten Linien der Liegeposition entspricht.

Um aus dem Lehnenrahmen 35 ein unteres Bett herzustellen, wird der Lehnenrahmen 35 mittels des Arretierhebels 86 gelöst und um das Gelenk 65,66 in Fahrtrichtung nach vorn geschwenkt, wobei das obere Ende 87 des Lehnenrahmens 35 sich auf dem Kreisbogen 87 nach unten bewegt und nach Einnahme einer Zwischenlage 88 die zur Montageleiste 26 parallele Lage 89 einnimmt. Dabei bewegen sich die Lagerstifte 57,58 ebenfalls auf einem in Figur 4 nicht dargestellten Kreisbogen um die Gelenke 65,66 bis zum Anschlag auf die Vorsprünge 55,56. Bei dieser Schwenkbewegung des Lehenrahmens 35 in Fahrtrichtung nach vorn schwenken auch die Gelenke 47,48 auf einem Kreisbogen 90 um die Gelenke 65,66 in die Liegeposition 90. Desgleichen schwenken die Gelenke 51,52 der Lenker 49,50 auf einem Kreisbogen 91 um die Gelenke 53,54 in die strichpunktierte Position 92. Bei diesen Schwenkbewegungen nehmen der Sitzrahmen 44 und die Wangen 45,46 die entsprechenden strichpunktierten Positionen 93 und 94 ein. Nach dieser Schwenkbewegung ist das in Figur 3 links dargestellte untere Bett fertiggestellt. Das in Figur 3 rechts dargestellte untere Bett wird in der gleichen Weise hergestellt.

Anschließend werden der Vorderrahmen 60 und der Hinterrahmen 61 in der in Figur 4 geknickt dargestellten Lage um das Lager 63 auf dem Kreisbogen 95 in Fahrzeuglängsrichtung nach oben bis in die strichpunktiert dargestellte horizontale Position 96 und 97 geschwenkt. Anschließend wird die Stütze 33 um das Gelenk 32 mit dem Kopf 84 auf dem Kreisbogen 98 nach oben in die strichpunktiert dargestellte Position 99 geschwenkt.

Dieser Vorgang ist aus Figur 7 in vergrößerter Darstellung im einzelnen zu ersehen: Die Stütze 33 wird auf dem Kreisbogen 98 zunächst nach geringfügigem Anheben des Vorderrahmens 96 im Uhrzeigersinn über die endgültige Position hinaus in die Position 100 geschwenkt. Anschließend wird der Vorderrahmen 96 in seine waagerechte Position herabgelassen und die Stütze 33 aus der Position 100 in die Position 101 geschwenkt, wobei der Kopf 102 so in ein in Figur 7 nach rechts hin offenes U-Profil 103 geschwenkt wird, daß eine Hinterdrehung 125 der Stütze 33 in den Schlitz 85 hineinschwenkt.

Anschließend wird der Hinterrahmen 97 um die Gelenke 105,106 auf dem Kreisbogen 107 im Uhrzeigersinn unter Einnahme der Zwischenlagen 108 und 109 in die horizontale Position 110 geschwenkt. In dieser horizontalen Position bildet ein Vollprofil 111 , das sich in Schwenkrichtung vor einem Vierkantprofil 112 befindet, das vordere Ende des Hinterrahmens 61 in der Position 110. Durch Anlage des Profils 111 von gemäß Figur 3 rechts her gegen den rechts offenen Schlitz 85 ist die Verriegelung der Stütze 33 sichergestellt.

In Figur 6 ist ein Ausschnitt der Wand 18 dargestellt. Diese besteht aus einem Lochblech 113, an dem eine Hartfaserplatte 114 angebracht ist, wobei zu beiden Seiten der Lochplatte 113 und der Faserplatte 114 eine Bespannung 115 und 116 aus Velour vorgesehen ist. Dieses elastische Wandteil ist oben zwischen zwei Lagerplatten 117 und 118 sowie unten zwischen zwei Lagerplatten 119 und 120 mittels je einer Schraube 121 und 122 befestigt.

**Patentansprüche**

1. Reisefahrzeug, insbesondere Reiseomnibus mit einem Mittelgang durch den Fahrgastraum, der zu beiden Seiten des Mittelganges durch Zwischenwände in mehrere Abteile mit je zwei einander gegenüber angeordneten Doppelsitzen mit Sitzbank und Rückenlehne unterteilt ist, die aus einer Sitzposition in eine Liegeposition und umgekehrt zu bringen sind, wobei jeder Doppelsitz einen die Rückenlehne aufnehmenden Lehnenrahmen und einen die Sitzbank aufnehmenden Sitzrahmen aufweist sowie der Lehnenrahmen mit der zugehörigen Zwischenwand gelenkig verbunden ist und hinter dem Lehnenrahmen ein in Fahrzeuglängsrichtung schwenkbeweglich angeordneter Bettrahmen vorgesehen ist sowie die oberen Betten durch Stützen unterstützt und mittels Gurten am Dach des Omnibusses befestigt sind, **dadurch gekennzeichnet,**
   a) daß die oberen Betten (81) durch verriegelbare Distanzierungsstäbe (33) in der gewünschten horizontalen Position gehalten sind,
   b) daß im Bereich der Seitenfenster und im Bereich des Daches (27) Fluchtwege (1) vorgesehen sind,
   c) daß die Zwischenwände (123,124) in den Bereichen der zwischen zwei benachbarten Fenstern befindlichen Fensterholme angeordnet sind und
   d) daß die Zwischenwände (123,124) elastisch ausgebildet sind.

2. Reisefahrzeug nach Anspruch 1 dadurch gekennzeichnet, daß die Distanzierungsstäbe (33) nur an ihren oberen Enden oder nur an ihren unteren Ende jeweils einzeln gegen Herauslösen aus der gewünschten Unterstützungsposition verriegelt sind.

3. Reisefahrzeug nach Anspruch 1, dadurch gekennzeichnet, daß die Distanzierungsstäbe (33) nur an ihren oberen Enden oder nur an ihren unteren Ende gemeinsam gegen Herauslösen aus der gewünschten Unterstützungsposition verriegelt sind.

4. Reisefahrzeug nach einem der vorhergehenden Ansprüche, dadurch gekennzeichnet,
   e) daß an den Zwischenwänden (123,124) in Höhe des Sitzrahmens (44) zwei Wandlaschen (42,43) in einem der Breite des Sitzrahmens (44) entsprechenden Abstand angeordnet sind,
   f) daß der Lehnenrahmen (35) etwa in Sitzhöhe zu beiden Seiten je eine Lehnenlasche (38,39) aufweist, die mit den Wandlaschen (42,43) drehbeweglich verbunden sind,

g) daß der Sitzrahmen (44) in seinem oberen Bereich gelenkig mit dem Lehnenrahmen (35) verbunden ist und

h) daß zu beiden Seiten des Sitzrahmens (44) an diesem (44) je ein Lenker (49,50) gelenkig angeordnet ist, der mit Abstand unterhalb des Sitzrahmens (44) ortsfest und gelenkig gelagert ist.

5. Reisefahrzeug nach Anspruch 4, dadurch gekennzeichnet, daß die Wandlaschen (42,43) und die Lehnenlaschen (38,39) über quer zur Fahrzeuglängsrichtung verlaufende Drehgelenke (40,41) miteinander verbunden sind.

6. Reisefahrzeug nach Anspruch 5, dadurch gekennzeichnet, daß zwischen den Lehnenrahmen (35) und den Sitzrahmen (44) quer zur Fahrzeuglängsrichtung verlaufende Drehgelenke (47,48) vorgesehen sind.

7. Reisefahrzeug nach Anspruch 5, dadurch gekennzeichnet, daß die Lenker (49,50) in quer zur Fahrzeuglängsrichtung verlaufenden Drehgelenken (51,52,53,54) gelagert sind.

8. Reisefahrzeug nach einem der vorhergehenden Ansprüche, dadurch gekennzeichnet, daß hinter jedem Lehnenrahmen (35) ein Bettrahmen (60,61) für das obere Bett (81) vorgesehen ist, der aus einem Vorderrahmen (60) und einem Hinterrahmen (61) besteht, wobei der Vorderrahmen (60) an der Zwischenwand (123) in Fahrzeuglängsrichtung schwenkbeweglich angeordnet und zwischen dem Vorderrahmen (60) und dem Hinterrahmen (61) ein Knickgelenk (65,66,68,69,70,71) vorgesehen ist.

9. Reisefahrzeug nach Anspruch 8, dadurch gekennzeichnet, daß an dem der Zwischenwand (123) abgewandten Ende des Vorderrahmens (60) zu dessen beiden Seiten je eine Vorderlasche (65,66) angeordnet ist und daß am benachbarten Ende des Hinterrahmens (61) zu dessen beiden Seiten je eine Hinterlasche (68,69) angeordnet ist, die beide (65,66,68,69) gelenkig miteinander verbunden sind.

10. Reisefahrzeug nach Anspruch 9, dadurch gekennzeichnet, daß an der Innenseite des Abteils eine als Distanzierungsstab dienende Armlehne (33) vorgesehen ist, die um eine vordere Achse (32) zum Abstützen der sich in der horizontalen Position (110) befindlichen Rückenlehne (35) hochschwenkbar ist, und daß am unteren Ende des Vorderrahmens (60) ein zum Ende des Vorderrahmens (60) hin offener Aufnahmeschlitz (85) für den Kopf (84) der Armlehne (33) vorgesehen ist, wobei der Aufnahmeschlitz (85) von dein gegenüberliegenden Ende (111) des sich anschließenden Hinterrahmens (61) verriegelt ist.

11. Reisefahrzeug nach einem der vorhergehenden Ansprüche, dadurch gekennzeichnet, daß an der Fensterseite des Abteils eine als Distanzierungsstab dienende Strebe vorgesehen ist, die um eine vordere Achse zum Unterstützen der sich in der horizontalen Position (110) befindlichen Rückenlehne (35) hochschwenkbar ist, und daß am unteren Ende des Vorderrahmens (60) ein zum Ende des Vorderrahmens (60) hin offener Aufnahmeschlitz (85) für den Kopf (84) der Strebe vorgesehen ist, wobei der Aufnahmeschlitz (85) von dem gegenüberliegenden Ende (111) des sich anschließenden Hinterrahmens (61) verriegelt ist.

12. Reisefahrzeug nach Anspruch 10 oder 11 , dadurch gekennzeichnet, daß der Kopf (84) des Distanzierungsstabes (33) eine Kopfplatte (102) und eine Hinterdrehung (125) aufweist, mit der er in den Aufnahmeschlitz (85) eingreift.

13. Reisefahrzeug nach einem der vorhergehenden Ansprüche, dadurch gekennzeichnet, daß die Zwischenwände (123,124) aus einem elastischen Lochblech (113) und einer Hartfaserplatte (114) bestehen, die beidseitig mit einem Velour (115,116) bespannt sind.

14. Reisefahrzeug nach Anspruch 13, dadurch gekennzeichnet, daß die einzelnen Zwischenwände (123,124) zwischen je zwei oberen und zwei unteren Aufnahmegabeln (117,118,119,120) festgeschraubt sind.

FIG.1

# FIG. 2

EP 0 518 046 A1

FIG. 3

# FIG.4

# FIG.5

EP 0 518 046 A1

EP 0 518 046 A1

## FIG. 7

## FIG. 6

FIG.8

12

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | EP-A-0 313 075 (KILIC)<br>* Seite 3, Zeile 9 - Seite 3, Zeile 55; Abbildungen 1-11 *<br>--- | 1 | B60N2/24<br>B60N2/34 |
| A,D | DE-C-3 618 826 (WELTER)<br>* Spalte 4, Zeile 39 - Spalte 5, Zeile 14; Abbildungen 1-12 *<br>--- | 1 | |
| A,D | DE-A-3 716 626 (WELTER)<br>--- | | |
| A,D | DE-B-1 217 805 (NICKEL)<br>--- | | |
| A | SE-B-449 838 (DUX)<br><br>----- | | |

RECHERCHIERTE SACHGEBIETE (Int. Cl.5 )

B60N
B60P
B61D

Der vorliegende Recherchenbericht wurde für alle Patentansprüche erstellt

| Recherchenort | Abschlußdatum der Recherche | Prüfer |
|---|---|---|
| DEN HAAG | 30 SEPTEMBER 1992 | HORVATH R. |